# EUROPÄISCHE PATENTSCHRIFT

(11) **EP 3 095 157 B1**
(45) Veröffentlichungstag und Bekanntmachung des Hinweises auf die Patenterteilung: **31.01.2018**
(21) Anmeldenummer: 14799768.8
(22) Anmeldetag: 18.11.2014
(51) Int. Cl.: H01R 4/34, F16B 33/06, H01R 11/12, H01R 11/26

(54) **ELEKTRISCH KONTAKTIERENDE BEFESTIGUNGSVORRICHTUNG**
ELECTRICALLY CONTACTING FASTENING DEVICE
DISPOSITIF DE FIXATION ÉTABLISSANT UN CONTACT ÉLECTRIQUE

(30) Priorität: 17.01.2014 DE 102014200809
(43) Veröffentlichungstag der Anmeldung: 23.11.2016
(73) Patentinhaber: Bayerische Motoren Werke Aktiengesellschaft, 80809 München (DE)
(72) Erfinder: BRANDSTETTER, Tobias, 80799 München (DE); FORSTER, Josef, 85051 Ingolstadt (DE); MOOSMAYR, Tobias, 85276Walkersbach (DE)
(86) Internationale Anmeldenummer: PCT/EP2014/074873
(87) Internationale Veröffentlichungsnummer: WO 2015/106856

(56) Entgegenhaltungen:
- EP-A1- 1 564 422
- DE-A1-102006 012 761
- US-A1- 2007 270 002

## Beschreibung

Die Erfindung betrifft eine elektrisch kontaktierende Befestigungsvorrichtung mit Gewindebolzen und Mutter, zwischen denen ein elektrisches Kontaktelement angeordnet wird.

Generell sind derartige Kontakt-Verbindungen bekannt, beispielsweise aus der DE 20 2005 021 114 U1 oder der DE 10 2008 010 352 A1.

Bei der elektrisch kontaktierenden Befestigung von Mutter und Gewindebolzen mit dazwischen angeordnetem Kontaktelement sind hohe Anzugsmomente an der Mutter nötig, um über die gesamte Lebensdauer den vorgegebenen elektrischen Widerstand der Kontaktierung aufrecht zu erhalten. Bei hubgezündeten Aluminiumbefestigungs- und Kontaktierungsvorrichtungen mit einem Gewindebolzen, einem Kontaktelement, vorzugsweise einem Kabelschuh, und einer Mutter wird deshalb zur Verschraubung der Mutter mit dem Gewindebolzen ein Gleitmittel verwendet, da es sonst beim Anziehen der Mutter zu einer plastischen Verformung des Gewindes und einer Art Verschweißung des Gewindematerials, allgemein als "Fressen des Gewindes" bezeichnet, kommen kann.

Herkömmlicherweise werden derartige in der Massenproduktion eingesetzte Bauteile (beispielsweise am Rahmen eines KFZ) der Befestigungsvorrichtung (Gewindebolzen, Mutter) im Trommelverfahren mit Gleitmittel beschichtet, wobei insbesondere auf der Mutter alle Stellen eine Gleitmittelbeschichtung erfahren. Das Gleitmittel begünstigt zwar die Befestigungseignung mit hohen Anzugsmomenten zur Gewährleistung einer sicheren mechanischen Verbindung, ist jedoch elektrisch schlecht leitend und fördert an den Kontaktflächen zu dem Kontaktelement über die Lebensdauer aufgrund seiner Gleiteigenschaften die Reibkorrosion.

Es ist deshalb die Aufgabe der Erfindung, eine elektrisch kontaktierende Befestigungsvorrichtung mit Befestigungselementen aus Aluminium bereitzustellen, die eine gegenüber dem Stand der Technik verbesserte elektrische Kontaktierung der Befestigungselement zu einem Kontaktelement über die gesamte Lebensdauer gewährleistet und, die eine mindestens gleichwertige Klemmkraft der Befestigungselemente an das Kontaktelement zulässt, ohne dass es zu Materialschäden an den Befestigungselementen kommt.

Die Aufgabe wird gelöst durch die Merkmalskombination gemäß Patentanspruch 1. Dabei wird eine elektrisch kontaktierende Befestigungsvorrichtung mit Gewindebolzen und Mutter vorgesehen, zwischen denen ein elektrisches Kontaktelement angeordnet wird. Der Gewindebolzen weist einen Kontaktierungsabschnitt zum flächigen Anlegen des Kontaktelements und einen Gewindeabschnitt auf. Die Mutter ist über den Gewindeabschnitt auf dem Gewindebolzen befestigbar und weist stirnseitig einen Kontaktierungsbereich zum flächigen Anliegen an dem Kontaktelement auf. Der Gewindeabschnitt des Gewindebolzens ist mit einer Gleitmittelbeschichtung versehen und der Kontaktierungsabschnitt des Gewindebolzens, das Kontaktelement und der stirnseitige Kontaktierungsbereich der Mutter sind gleitmittelfrei gehalten, um eine optimale Kontaktierung über die gesamte Lebendauer zu gewährleisten. Da sich das Problem der Materialverschweißung aufgrund hoher Anzugsmomente hauptsächlich bei Aluminium oder anderen Weichmetallen zeigt, betrifft die Erfindung insbesondere derartige Befestigungselemente (Gewindebolzen, Mutter). Die Mutter ist als Hutmutter ausgebildet, die auf den Gewindebolzen gesetzt und daran verschraubt wird, wobei die den Kontaktbereich bildende Stirnfläche der Hutmutter gleitmittelfrei ist. Da bereits der Gewindebolzen mit Gleitmittel beschichtet ist, kann das Gewinde der Hutmutter ebenfalls gleitmittelfrei sein. Ein Überschuss an Gleitmittel an beiden Befestigungselementen kann zu einer Materialüberlastung und einem Benetzen der Kontaktflächen führen, was unerwünscht ist.

In einer günstigen Ausführungsform der Erfindung ist vorgesehen, dass der Gewindebolzen einen planen und scheibenförmigen Kontaktierungsabschnitt aufweist. Ebenso ist vorteilhaft, dass der stirnseitige Kontaktierungsbereich der Mutter plan ausgebildet ist, um eine bestmögliche Kontaktierung und Abdichtung des Kontaktbereichs zu erzielen. Das Kontaktelement weist mit dem Kontaktierungsbereich der Mutter und dem Kontaktierungsabschnitt des Gewindebolzens vorzugsweise eine Koplanarität in einem Bereich von jeweils 30 - 65 µm auf, weiter bevorzugt 30 - 50 µm.

Eine derartige Koplanarität ermöglicht eine dichte, korrosionsbeständige Befestigung zwischen Gewindebolzen, Kontaktelement und Mutter über die gesamte Lebensdauer.

In einer weiterhin günstigen Ausführung ist vorgesehen, dass das Kontaktelement (z.B. der Kabelschuh) zumindest im Kontaktbereich eine Zinnschicht umfasst, die vorzugsweise eine Dicke von 10-15 µm aufweist. Die definierte Dicke gewährleistet einen Ausgleich von Unebenheiten, verhindert aber gleichzeitig Abplatzungen bzw. Ablösungen.

Als Verfahren zum Bereitstellen einer derartigen elektrisch kontaktierenden Befestigungsvorrichtung ist vorgesehen, dass die Gleitmittelbeschichtung des Gewindebolzens im Tauchverfahren oder Umspülverfahren aufgetragen wird. In einer günstigen Ausführung wird der Gewindeabschnitt des Gewindebolzens durch ein Gleitmittelbad geführt, während der Gewindebolzen an dem Kontaktierungsabschnitt gehalten wird. Beispielsweise kann der Kontaktierungsabschnitt an einer automatisiert bewegten Schienenvorrichtung gehalten werden, während der Gewindeabschnitt schwerkraftbedingt hängend durch das Gleitmittelbad geführt wird.

Die obigen Merkmale können wahlweise kombiniert werden, soweit dies technisch möglich ist. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine teilweise geschnittene Seitenansicht der Befestigungsvorrichtung ohne Kontaktelement; und
- Fig. 2: eine perspektivische Ansicht der Befestigungsvorrichtung aus Figur 1 mit Kontaktelement.

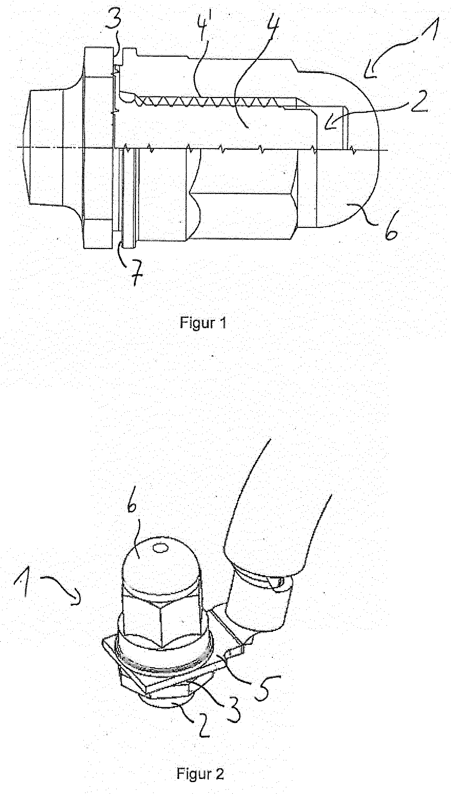

In Figur 1 ist die elektrisch kontaktierende Befestigungsvorrichtung 1 mit einem Gewindebolzen 2 und einer Mutter 6 in einer teilweise geschnittenen Ansicht dargestellt. Figur 2 zeigt die Befestigungsvorrichtung aus Figur 1 in einer perspektivischen Ansicht mit zwischen dem Gewindebolzen 2 und der Mutter 6 angeordnetem elektrischen Kontaktelement 5.

Die Anordnung aus Figur 1 spiegelt den Auslieferungszustand von Gewindebolzen 2 und Mutter 6 wieder. Bei der Montage der Befestigungsvorrichtung beispielsweise an einen KFZ-Rahmen wir das Kontaktelement 5 eingefügt und die Mutter 6 mit einem vorgegebenen Anzugsmoment angezogen. Diese Befestigung muss über die gesamte Lebensdauer des KFZ halten, ohne dass die elektrische Leitfähigkeit sinkt oder, dass die Bauteile im Spalt zwischen Kontaktelement 5 und Mutter 6 oder Gewindebolzen 2 korrodieren. Gezeigt sind ein M10-Gewindebolzen und einen M10-Mutter aus Aluminium, die beispielsweise mit einem Anzugsmoment von 14-20Nm befestigt werden. Das Kontaktelement 5 ist ein Kontaktschuh zu elektrischen Erdung beispielsweise eines KFZ-Sensors.

Die als Hutmutter ausgebildete Mutter 6 ist über den Gewindeabschnitt 4 auf dem Gewindebolzen 2 befestigt und weist stirnseitig einen Kontaktierungsbereich 7 zum flächigen Anliegen an dem Kontaktelement 5 auf. Ausschließlich der Gewindeabschnitt 4 des Gewindebolzens 2 ist mit einer Gleitmittelbeschichtung versehen, um die hohen Anzugsmomente und die entsprechend hohe Klemmkraft zu gewährleisten, ohne dass es zu Materialbeschädigungen am Gewinde kommt. Der Kontaktierungsabschnitt 3 des Gewindebolzens 2, das Kontaktelement 5 und der stirnseitige Kontaktierungsbereich 7 der Mutter 6 sind hingegen gleitmittelfrei und ermöglichen eine über die Lebensdauer gleichbleibend gute elektrische direkte Kontaktierung ohne dazwischen liegender Gleitmittelschicht.

Der Gewindebolzen 2 weist einen planen und scheibenförmigen Kontaktierungsabschnitt 3 auf. Der stirnseitige Kontaktierungsbereich 7 der Mutter 6 ist ebenfalls plan ausgebildet, so dass im befestigten Zustand gemäß Figur 2 das Kontaktelement 5 plan und dicht an dem Kontaktierungsabschnitt 3 und dem Kontaktierungsbereich 7 anliegt. Das Kontaktelement 5 weist eine Zinnschicht von 10-15 µm auf, um Unebenheiten auszugleichen und ein Ablösen zu verhindern. Die dauerhafte, korrosionsbeständige Befestigung wird ferner durch die ausgezeichnete Koplanarität des Kontaktelements 5 mit dem Kontaktierungsbereich 7 der Mutter 6 und dem Kontaktierungsabschnitt 3 des Gewindebolzens 2 erzielt, die in einem Bereich von jeweils 30 - 65 µm liegt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann als Zinnbeschichtung ein spezielles Mattzinn verwendet werden.

## Patentansprüche

1. Elektrisch kontaktierende Befestigungsvorrichtung mit einem Gewindebolzen (2) und einer Mutter (6), zwischen denen ein elektrisches Kontaktelement (5) angeordnet ist, wobei
der Gewindebolzen (2) einen Kontaktierungsabschnitt (3) aufweist, mit dem er flächig am Kontaktelement (5) anliegt und einen Gewindeabschnitt (4),
die Mutter (6) über den Gewindeabschnitt (4) auf dem Gewindebolzen (2) befestigt ist und stirnseitig mit seinen Kontaktierungsbereich (7) flächig an dem Kontaktelement (5) anliegt,
der Gewindeabschnitt (4) des Gewindebolzens (2) mit einer Gleitmittelbeschichtung versehen ist, und
der Kontaktierungsabschnitt (3) des Gewindebolzens (2), das Kontaktelement (5) und der stirnseitige Kontaktierungsbereich (7) der Mutter (6) gleitmittelfrei sind.

2. Elektrisch kontaktierende Befestigungsvorrichtung nach Anspruch 1, **dadurch gekennzeichnet, dass** der Gewindebolzen (2) und die Mutter (6) aus Aluminium sind.

3. Elektrisch kontaktierende Befestigungsvorrichtung nach einem der vorigen Ansprüche, **dadurch gekennzeichnet, dass** die Mutter (6) als Hutmutter ausgebildet ist.

4. Elektrisch kontaktierende Befestigungsvorrichtung nach zumindest einem der vorigen Ansprüche, **dadurch gekennzeichnet, dass** der Gewindebolzen (2) einen planen und scheibenförmigen Kontaktierungsabschnitt (3) aufweist.

5. Elektrisch kontaktierende Befestigungsvorrichtung nach zumindest einem der vorigen Ansprüche, **dadurch gekennzeichnet, dass** der stirnseitige Kontaktierungsbereich (7) der Mutter (6) plan ausgebildet ist.

6. Elektrisch kontaktierende Befestigungsvorrichtung nach zumindest einem der vorigen Ansprüche, **dadurch gekennzeichnet, dass** im befestigten Zustand das Kontaktelement (5) plan sowie dicht und somit korrosionsbeständig an dem Kontaktierungsabschnitt (3) und dem Kontaktierungsbereich (7) anliegt.

7. Elektrisch kontaktierende Befestigungsvorrichtung nach zumindest einem der vorigen Ansprüche, **dadurch gekennzeichnet, dass** das Kontaktelement (5) eine Zinnschicht von 10-15 µm aufweist.

8. Elektrisch kontaktierende Befestigungsvorrichtung nach zumindest einem der vorigen Ansprüche, **dadurch gekennzeichnet, dass** das Kontaktelement (5) mit dem Kontaktierungsbereich (7) der Mutter (6) und dem Kontaktierungsabschnitt (3) des Gewindebolzens (2) eine Koplanarität in einem Bereich von jeweils 30 - 65 µm aufweist.

9. Verfahren zum Bereitstellen einer elektrisch kontaktierenden Befestigungsvorrichtung mit einem Gewindebolzen (2) und einer Mutter (6), zwischen denen ein elektrisches Kontaktelement (5) angeordnet ist, wobei der Gewindebolzen (2) einen Kontaktierungsabschnitt (3) aufweist, mit dem er flächig am Kontaktelement (5) anliegt und einen Gewindeabschnitt (4), die Mutter (6) über den Gewindeabschnitt (4) auf dem Gewindebolzen (2) befestigt ist und stirnseitig mit seinen Kontaktierungsbereich (7) flächig an dem Kontaktelement (5) anliegt, der Gewindeabschnitt (4) des Gewindebolzens (2) mit einer Gleitmittelbeschichtung versehen ist, und der Kontaktierungsabschnitt (3) des Gewindebolzens (2), das Kontaktelement (5) und der stirnseitige Kontaktierungsbereich (7) der Mutter (6) gleitmittelfrei sind, wobei die Gleitmittelbeschichtung des Gewindebolzens (2) im Tauchverfahren oder Umspülverfahren aufgetragen wird.

10. Verfahren nach dem vorigen Anspruch, **dadurch gekennzeichnet, dass** der Gewindeabschnitt (4) des Gewindebolzens (2) durch ein Gleitmittelbad geführt wird, während der Gewindebolzen (2) an dem Kontaktierungsabschnitt (3) auf einer bewegbaren Schiene gehalten wird.

## Claims

1. An electrically contacting fastening device with a threaded bolt (2) and a nut (6), between which an electrical contact element (5) is arranged, wherein
the threaded bolt (2) has a contacting portion (3) with which it lies in surface-to-surface contact against the contact element (5), and a threaded portion (4),
the nut (6) is fastened to the threaded bolt (2) by means of the threaded portion (4) and on its end face lies with its contacting region (7) in surface-to-surface contact against the contact element (5),
the threaded portion (4) of the threaded bolt (2) is provided with a lubricant coating, and
the contacting portion (3) of the threaded bolt (2), the contact element (5) and the end-face contacting region (7) of the nut (6) are free from lubricant.

2. An electrically contacting fastening device according to Claim 1, **characterised in that** the threaded bolt (2) and the nut (6) are made of aluminium.

3. An electrically contacting fastening device according to one of the preceding claims, **characterised in that** the nut (6) is formed as a cap nut.

4. An electrically contacting fastening device according to at least one of the preceding claims, **characterised in that** the threaded bolt (2) has a planar, disc-shaped contacting portion (3).

5. An electrically contacting fastening device according to at least one of the preceding claims, **characterised in that** the end-face contacting region (7) of the nut (6) is of planar form.

6. An electrically contacting fastening device according to at least one of the preceding claims, **characterised in that** in the fastened state the contact element (5) lies in planar manner and also tightly and thus in corrosion-resistant manner against the contacting portion (3) and the contacting region (7).

7. An electrically contacting fastening device according to at least one of the preceding claims, **characterised in that** the contact element (5) has a tin layer of 10-15 µm.

8. An electrically contacting fastening device according to at least one of the preceding claims, **characterised in that** the contact element (5) with the contacting region (7) of the nut (6) and the contacting portion (3) of the threaded bolt (2) have a co-planarity in a range of 30 - 65 µm in each case.

9. A method for providing an electrically contacting fastening device with a threaded bolt (2) and a nut (6), between which an electrical contact element (5) is arranged, wherein the threaded bolt (2) has a contacting portion (3) with which it lies in surface-to-surface contact against the contact element (5), and a threaded portion (4), the nut (6) is fastened to the threaded bolt (2) by means of the threaded portion (4) and on its end face lies with its contacting region (7) in surface-to-surface contact against the contact element (5), the threaded portion (4) of the threaded bolt (2) is provided with a lubricant coating, and the contacting portion (3) of the threaded bolt (2), the contact element (5) and the end-face contacting region (7) of the nut (6) are free from lubricant, wherein the lubricant coating of the threaded bolt (2) being applied in a dipping process or a flow-around process.

10. A method according to the preceding claim, **characterised in that** the threaded portion (4) of the threaded bolt (2) is passed through a lubricant bath, while the threaded bolt (2) is held on the contacting portion (3) on a movable rail.

## Revendications

1. Dispositif de fixation établissant un contact électrique comprenant un boulon fileté (2) et un écrou (6) entre lesquels est monté un élément de contact électrique (5), dans lequel
le boulon fileté (2) comporte un segment de mise en contact (3) avec lequel il s'applique à plat sur l'élément de contact (5) et un segment fileté (4),
l'écrou (6) est fixé sur le boulon fileté (2) par le segment fileté (4) et s'applique frontalement à plat sur l'élément de contact (5) par sa zone de mise en contact (7),
le segment fileté (4) du boulon fileté (2) et équipé d'un revêtement antifriction, et
le segment de mise en contact (3) du boulon fileté (2), l'élément de contact (5) et la zone de mise en contact frontale (7) de l'écrou (6) sont exempts d'agent antifriction.

2. Dispositif de fixation établissant un contact électrique conforme à la revendication 1,
**caractérisé en ce que**
le boulon fileté (2) et l'écrou (6) sont réalisés en aluminium.

3. Dispositif de fixation établissant un contact l'électrique conforme à l'une des revendications précédentes,
**caractérisé en ce que**
l'écrou (6) est réalisé sous la forme d'un écrou borgne.

4. Dispositif de fixation établissant un contact électrique conforme à au moins l'une des revendications précédentes,
**caractérisé en ce que**
le boulon fileté (2) comporte un segment de mise en contact plan et en forme de disque (3).

5. Dispositif de fixation établissant un contact électrique conforme à au moins l'une des revendications précédentes,
**caractérisé en ce que**
la zone de mise en contact frontale (7) de l'écrou (6) est plane.

6. Dispositif de fixation établissant un contact électrique conforme à au moins l'une des revendications précédentes,
**caractérisé en ce qu'**
à l'état fixé l'élément de contact (5) s'applique à plat et hermétiquement et ainsi de façon à résister à la corrosion sur le segment de mise en contact (3) et la zone de mise en contact (7).

7. Dispositif de fixation établissant un contact électrique conforme à au moins l'une des revendications précédentes,
**caractérisé en ce que**
l'élément de contact (5) comporte une couche d'étain de 10-15 µm.

8. Dispositif de fixation établissant un contact électrique conforme à au moins l'une des revendications précédentes,
**caractérisé en ce que**
l'élément de contact (5) est coplanaire à la zone de mise en contact (7) de l'écrou (6) et au segment de mise en contact (3) du boulon fileté (2) dans une zone de respectivement 30-65 µm.

9. Procédé d'obtention d'un dispositif de fixation établissant un contact électrique comprenant un boulon fileté (2) et un écrou (6) entre lesquels est situé un élément de contact électrique (5), le boulon fileté (2) comprenant un segment de mise en contact (3) par lequel il s'applique à plat sur l'élément de contact (5), et un segment fileté (4), l'écrou (6) étant fixé sur le boulon fileté (2) par le segment fileté (4), et s'appliquant frontalement à plat sur l'élément de contact (5), par sa zone mise en contact (7), le segment fileté (4) du boulon fileté (2) étant équipé d'un revêtement antifriction, et le segment de mise en contact (3) du boulon fileté (2), l'élément de contact (5) et la zone de mise en contact frontale (7) de l'écrou (6) étant exempts d'agent antifriction, le revêtement antifriction du boulon fileté (2) étant appliqué par immersion ou par pulvérisation.

10. Procédé conforme à la revendication précédente,
**caractérisé en ce que**
le segment fileté (4) du boulon fileté (2) est transféré dans un bain d'agent antifriction tandis que le boulon fileté (2) est maintenu sur un rail mobile au niveau du segment de mise en contact (3).
